# EUROPEAN PATENT APPLICATION

(11) **EP 4 398 201 A1**
(43) Date of publication of application: **10.07.2024**
(21) Application number: 23150495.2
(22) Date of filing: 05.01.2023
(51) Int. Cl.: G06V 20/59, G06V 40/10

(54) **ACTIVITY AND SEATING POSE CLASSIFICATION**

(71) Applicant: Aptiv Technologies AG, 8200 Schaffhausen (CH)
(72) Inventor: OSAMA, Muhammad, 42105 Wuppertal (DE); WEYERS, Patrick, 44263 Dortmund (DE); REHFELD, Timo, 51109 Köln (DE); GEORGE, Amil, 42117 Wuppertal (DE)
(74) Representative: Bardehle Pagenberg Partnerschaft mbB Patentanwälte Rechtsanwälte

(57) **Abstract**

A computerized method of activity and seating pose detection in a vehicle is presented. The method comprises determining activity events per seat in the vehicle based on at least one of a hand-region proximity check and a hand-object proximity check, determining seating pose events per seat in the vehicle based on a seating pose classifier, and trigger one or more safety or comfort functions in the vehicle based on the activity events and/or the seating pose events.

## Description

### FIELD

The present disclosure generally relates to safety improvements for vehicles and, in particular, to methods and systems of activity and seating pose classification in a vehicle.

### BACKGROUND

Smart vehicles, such as smart cars, smart busses, and the like, are on their way to significantly improve the safety of passengers. Such smart vehicles may be equipped with onboard cameras and may be capable of capturing images of the vehicle's interior. Those images can then be used, sometimes in combination with other sensors, for different safety related tasks, such as detecting persons in the vehicle, categorizing persons in adults or children, detecting objects in the vehicle, determining whether one of the vehicle's door is open, or the like.

Detecting or categorizing persons in a vehicle is already leading to improvements in safety. However, persons do not sit still in the cabin but change their pose or activity, which is currently rarely considered in safety measures of a vehicle. Even if pose or activity detection is used, the information is only used in a limited manner, e.g., for detection of one specific activity or for verifying the input of another sensor or module.

Hence, there is a need for providing an effective and efficient technical implementation of generally detecting and classifying specific activities and seating poses to be used for safety improvements in a vehicle.

### SUMMARY

In this context, methods, systems and computer program products are presented as defined by the independent claims.

More specifically, a computerized method of activity and seating pose detection in a vehicle is presented. The method comprises determining activity events per seat in the vehicle based on at least one of a hand-region proximity check and a hand-object proximity check, determining seating pose events per seat in the vehicle based on a seating pose classifier, and trigger one or more safety or comfort functions in the vehicle based on the activity events and/or the seating pose events.

In embodiments, the hand-region proximity check and/or the hand-object proximity check comprise assigning hands to one or more passengers in the vehicle. In further embodiment, assigning hands to the one or more passengers in the vehicle comprises obtaining an object detected in the vehicle and classified as hand, determining a distance between a wrist body key point of a passenger and a bounding box of the object classified as hand, and, in response to the distance between the wrist body key point and the bounding box being smaller than a first threshold, assigning the hand position to the passenger.

In yet further embodiments, assigning hands to the one or more passengers in the vehicle comprises extrapolating a line between an elbow key point and a corresponding wrist key point of a passenger for a hand distance, and assigning the hand position to the passenger. In further embodiments is the method triggered in response to no objects classified as hands being available for a passenger.

In some embodiments, the hand-region proximity check comprises determining a distance between an activity region and a position of a hand of a passenger, and, in response to the distance between the activity region and a position of the hand being smaller than a second threshold, generating an activity event and calculating a corresponding activity confidence value. In some further embodiments, the hand-object proximity check comprises determining a distance between one or more bounding boxes of one or more detected objects and a position of a hand of a passenger, and, in response to the distance between the one or more bounding boxes and the position of the hand being smaller than a third threshold, generating an activity event and calculating a corresponding activity confidence value.

In some embodiments, determining seating pose events per seat comprises determining a feature descriptor of a passenger based on body key points of the passenger in the vehicle, and applying the seating pose classifier on the feature descriptor. In some further embodiments, the feature descriptor comprises at least one of an angle between a line connecting left and right shoulder key points of the passenger and a first image reference line, an angle between a line connecting left and right hip key points of the passenger and a second image reference line, an angle between a line connecting hip center key point and shoulder center key point of the passenger and a third image reference line, and normalized key point locations adjusted relative to a seat location bounding box. In some embodiments, the seating pose classifier is a fully connected neural network, a random forest, a support vector machine or a boosting cascade classifier.

In embodiments, one or more detected objects in the vehicle are classified into object types, wherein the object types comprise as at least one of mobile phone, tablet, laptop, food, cup, book, and newspaper, wherein the determined activity event is dependent on the classified object type. In some embodiments, one or more activity regions in the vehicle correspond to locations in the vehicle, wherein the locations comprise as at least one of center console, glove box, door opener, and smart display, wherein the determined activity event is dependent on the defined location.

Another aspect concerns a system of activity and seating pose detection in a vehicle, the system implementing the methods as described herein.

A further aspect concerns a vehicle comprising a camera for capturing images, and the system of activity and seating pose detection as described herein.

A final aspect concerns a computer program product comprising instructions, which, when executed on a computer, cause the computer to perform the methods as described herein.

These and other objects, embodiments and advantages will become readily apparent to those skilled in the art from the following detailed description of the embodiments having reference to the attached figures, the disclosure not being limited to any particular embodiments.

### BRIEF DESCRITPTION OF THE DRAWINGS

The foregoing and further objects, features and advantages of the present subject matter will become apparent from the following description of exemplary embodiments with reference to the accompanying drawings, wherein like numerals are used to represent like elements, in which:
Fig. 1 is a high-level overview of an implementation of activity and seating pose classification.
Fig. 2 depicts an input image with determined body key points.
Fig. 3 shows two images with determined bounding boxes around objects.
Fig. 4 shows a flowchart and an illustration of an embodiment of assigning hand positions to passengers.
Fig. 5 shows a flowchart and an illustration of another embodiment of assigning hand positions to passengers.
Figs. 6A and 6B present flowcharts of a hand-region proximity check and a hand-object proximity check according to embodiments.
Fig. 7 shows a flowchart and an illustration of an embodiment of determining and applying a feature descriptor.
Fig. 8 highlights the results of 5'838 seating pose predictions with a seating pose classifier based on the feature descriptor according to the disclosure.
Fig. 9 presents an interior of a vehicle with possible positions of cameras.
Fig. 10 is diagrammatic representation of a computing system implementing the functionalities described herein.

### DETAILED DESCRIPTION

The present disclosure relates to methods and systems of activity and seating pose classification in a vehicle that improves the safety of vehicles, such as cars, trains, busses, ships, and the like. A vehicle is also referred to in the following as smart vehicle, smart car, or car.

Human pose estimation of passengers in the vehicle cabin is quickly becoming a commodity feature enabler which is a foundation that allows to build several further features and use cases that improve the safety of passengers in and the handling of a vehicle. Two such features are classifying certain activities as well as seating poses of people in the vehicle's cabin.

Activities of passengers and drivers include, but are not limited to reaching to pre-determined areas with their hand, e.g., center console, glove box, roof module, or interaction of a person with an object, e.g., phone in hand, phone on ear, food/drinks in hand, eating, smoking, or reading a newspaper. Seating poses of passengers and drivers include, but are not limited to, body leaning forward, person turning around in seat, feet on dashboard, feet on seat, person in normal position, person leaning sideways, and the like.

Detections of such activities can be used to support safety features, such as distraction detection, controlling of airbags and seatbelts, warning signals provided through onboard systems etc., or support comfort features, such as automatically turning on lights when a person is starting to read a book/magazine/newspaper, or turning on lights when a person is looking for something on other seats of the vehicle etc.

The herein described technical realization of detecting and classifying specific activities as well as seating poses and uses estimated body key points and detected objects as input. The input is determined based on images captured by one or more onboard cameras in a vehicle. It further enables configuring new activities and poses without requiring changes in the implementation. Moreover, the presented realization provides for encoding results of detected body key points into feature descriptors that facilitate the classification of different seating poses.

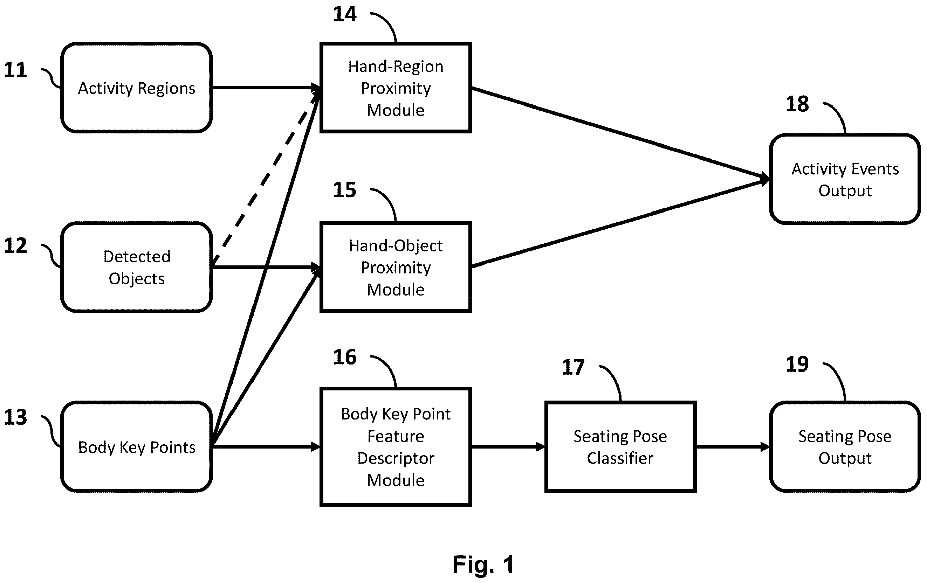

Fig. 1 is a high-level overview of an implementation of activity and seating pose classification in a vehicle. The activity and seating pose classification works on three types of inputs, namely, one or more configurations of activity regions 11, one or more detected objects 12, and a plurality of body key points 13. These inputs are determined based on or defined relative to one or more input images taken by one or more onboard cameras. Such cameras may comprise RGB-IR (Red-Green-Blue-InfraRed) camera which can capture RGB color as well as IR spectrum. The one or more cameras may be positioned inside the cabin of the vehicle with a field of view that captures one or more passengers. For example, there can be one camera for each seat in the vehicle, one camera capturing the whole interior, or one camera at the front for two front seats and one other camera at the middle ceiling of the vehicle to capture the rear seats. At least one camera may have a good visibility on the driver's head and torso region.

The activity regions 11 relate to locations in the vehicle, such as a center console, a glove box, a door opener, or smart display. The activity regions 11 may be statically defined locations relative to one or more images taken by cameras in the vehicle and may be defined as regions on these images. For example, the console may be defined as region, e.g., bounding box or a convex hull in the one or more images. Generally, activity regions can be defined by any geometric form:, such as rectangle, circle, ellipse, polygon or the like.

The detected objects 12 may be provided by an object detector that is applied on the one or more images and detects several types of objects. Detection of objects may comprise analyzing the one or more images for detection of objects and classification of the detected objects into object types. The detected objects 12 may, thus, comprise a bounding box for the detected object and a classification as a specified object type. The object types may comprise as at least one of mobile phone, tablet, laptop, food, cup, book, and newspaper. The object detector may also detect and classify humanoid objects, such as hands, feet, heads and the like. The object detector may be implemented by any suitable method that is capable of outputting bounding boxes and classifying objects, e.g., a machine learning classifier or the like.

The body key points 13 may be provided by a key point detector that is applied on the one or more images and detects several body key points for a passenger. For example, the key point detector may detect key points for shoulders, hips, elbows, wrists, knees, and the like, of passengers in the vehicle. These body key points 13 may then comprise the respective pixel values of a set of body key points for a passenger and may be associated to a specific seat in the vehicle. Hence, a set of body key points may relate to a passenger on a set. Moreover, a set of body key points must not be complete, i.e., some body key points may also be missing.

The activity regions 11, detected objects 12, and body key points 13 are used by different modules of the activity and seating pose classification. These modules are a hand-region proximity module 14, a hand-object proximity module 15, a body key point feature descriptor module 16, and a seating pose classifier 17. Although these modules are depicted as separate modules, they may also be implemented in one multitasking module. Alternatively, the body key point feature descriptor module 16 and the seating pose classifier 17 and/or the hand-region proximity module 14 and the hand-object proximity module 15 may form a single module. Other implementations are possible, too.

The hand-region proximity module 14 uses as input the configurations of the activity regions 11 and the body key points 13. In some embodiments, the hand-region proximity module 14 also uses some information about detected objects 12. For example, the hand-region proximity module 14 may use information about detected hands, i.e., some detected objects 12, of passengers in addition to body key points 13 of the passengers. In some other embodiments, the hand-region proximity module 14 is only provided with the body key points 13. The hand-region proximity module 14 determines activity events output 18 per seat in the vehicle.

The hand-region proximity module 14 may first determine the positions of the left and right hands of the passengers in the vehicle. Afterwards, the hand-region proximity module 14 may determine a distance of the hand positions to the activity regions 11. If the hand is close to an activity region 11, an activity event is triggered and provided as activity event output 18 to another module in the vehicle. Hence, the hand-region proximity module 14 detects whether passengers aim at reaching to pre-determined areas with their hand, e.g., to the center console, glove box, roof module, or the like.

For example, if the activity region is the smart display of the vehicle, the activity event may relate to 'interaction with the smart display'. This event may be triggered and the respective output may be provided, e.g., to the smart display that is then activated and/or brightened for interaction. In another example, if the activity region is the (empty) middle rear seat and the driver's hand is there because the driver may, e.g., search for something, the activity event may relate to 'searching at middle rear seat'. This event may be triggered and the respective output may be provided, e.g., to the vehicle's light controlling module that turns on the light at the back. However, if the driver is driving the car, this event may also lead to a warning signal due to distraction detection.

The hand-object proximity module 15 works similar to the hand-region proximity module 14. The hand-object proximity module 15 uses as input the detected objects 12 and the body key points 13. The hand-object proximity module 15 may first determine the positions of the left and right hands of the passengers in the vehicle. Afterwards, hand-object proximity module 15 may determine a distance of the hand positions to the detected objects 12. If the hand is close to a detected object 12, an activity event is triggered and provided as activity event output 18 to another module in the vehicle. Hence, the hand-object proximity module 145 detects interactions of passengers with objects, e.g., phone in hand, phone on ear, food/drinks in hand, eating, drinking, smoking, reading a newspaper, or the like.

For example, if the detected object 12 is classified as mobile phone and the hand of the driver approaches or is at the mobile phone, the activity event 'phone use' may be triggered and the corresponding activity event output 18 may be provided, e.g., to a smart display of the vehicle, which then connects to the phone to facilitate setting up a call or the like. Moreover, if the driver is using the phone for a longer time, i.e., the hand is near or at the phone during a longer time period reflected by a sequence of images taken in the vehicle, a warning signal may be presented to remind the driver to use the smart display to not be distracted from driving the vehicle.

The the body key point feature descriptor module 16 and the seating pose classifier 17 are used to determine seating pose outputs 19 per seat in the vehicle. A seating pose output 19 is related to a seating pose event, such as person leaning forward, person turning around in seat, feet on dashboard, feet on seat, person in normal position, person leaning sideways, or the like.

The body key point feature descriptor module 16 determines from the detected body key points a feature descriptor, which is an input feature vector for the seating pose classifier 17. The body key points 13 comprise pixel positions for each detected joint, i.e., key point of a passenger. Using those pixel locations directly as feature in a classifier is possible but leads to wrong classifications when determining the seating pose, because a small person and a large person would have very different body key point locations in the image (i.e., different pixel values of the body key points), even when sitting in the same seating pose. The feature descriptor is calculated in the body key point feature descriptor module 16 so that it is invariant to the person's size, the vehicle cabin geometry, the camera resolution and field of view, etc. - at least invariant as much as possible. The feature descriptor, thus, leads to that the seating pose classifier 17 can be applied on more use cases, i.e., it generalizes more easily, and is more robust and flexible.

The feature descriptor may comprise at least one of an angle between a line connecting left and right shoulder key points of the passenger and a first image reference line, an angle between a line connecting left and right hip key points of the passenger and a second image reference line, an angle between a line connecting hip center key point and shoulder center key point of the passenger and a third image reference line, and normalized key point locations adjusted relative to a seat location bounding box. In particular, normalized means that position and scale of the body key point pixel values are adjusted relative to a pre-configured seat location bunding box in the image. The seat location bounding box may alternatively be determined on the fly according to the current seat position and may also take other information, e.g., mounted child seats etc. into account.

The seating pose classifier 17 may be any type of non-linear machine learning classifier, e.g., a neural network, a random forest, a support vector machine, a boosting cascade algorithm, or the like. In an embodiment, the seating pose classifier 17 is a 4-layer fully connected neural network with only a few thousand parameters that already reaches satisfactory performance.

Based on the activity events output 18 and/or the seating pose output 19, one or more safety or comfort functions in the vehicle are triggered. For example, if there is an activity event 'door opening' detected, a warning signal may appear if another vehicle, a cyclist, or a pedestrian is recorded on outside sensors to approach the door that will be opened. Or in another example, if there is a seat pose event 'feet on dashboard' detected, a warning text may occur on the smart display in the vehicle that indicates the safety issues with feet on the dashboard. Or in yet another example, if there is an activity event 'reading a newspaper' detected for a rear seat, reading lights for the respective seat may be turned on.

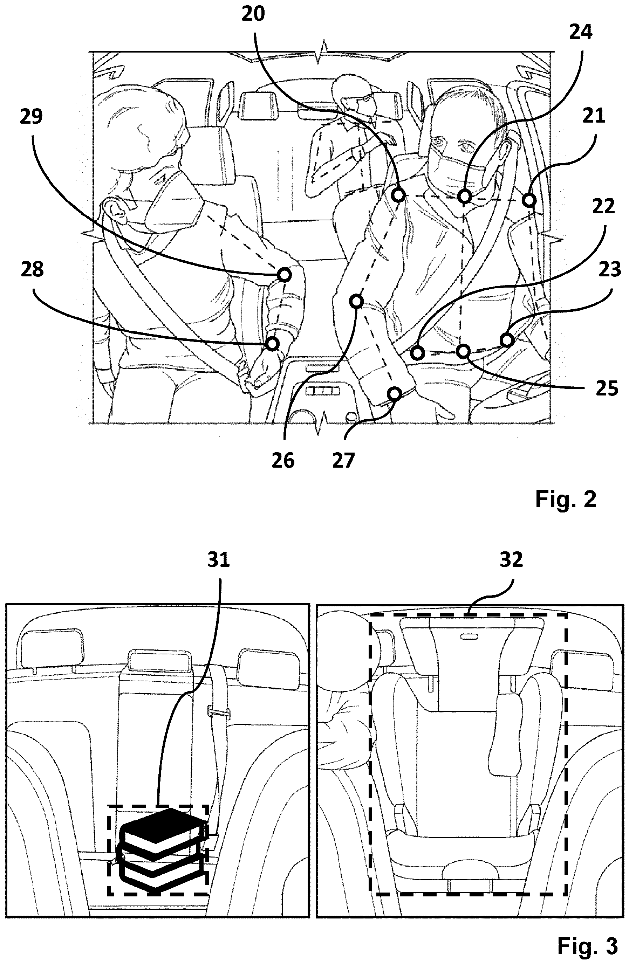

Fig. 2 depicts an input image of an interior of a vehicle, in which three persons are sitting, namely, two at the front seats and one at a rear seat. A body key point detector has been applied on the image and has determined body key points for the passengers.

There are different kinds of body key points belonging to a set of body key points of the passenger, which are illustrated at the driver's body. There are shoulder key points, e.g., for the right shoulder 20 and the left shoulder 21, hip key points, e.g., for the right hip 22 and for the left hip 23, a center shoulder key point 24, a center hip key point 25, elbow key points 26, wrist key points 27, and further key points not depicted in Fig. 2. For example, there may also be key points for the knees, the ankles, and the like. For some passengers, not all key points may be detectable, e.g., because the arms are behind another person. For implementing a body key point detector, any image classifier may be used that is capable of determining and classifying regions on a human's body.

It should be noted that body key points may be determined for every person on one or more images taken by one or more onboard cameras, e.g., also for the person sitting on the co-driver seat. As an example, the co-driver's wrist key point 28 and elbow key point 29 have been marked in Fig. 2. The images taken by the onboard cameras may also be subdivided into regions, e.g., seat regions, so that for each seat the respective body key points are determined. In some embodiments, the images of multiple cameras may also be merged to determine a 3D image of the interior in which the body key points are determined.

Fig. 3 shows two images with determined bounding boxes around objects. Object detectors may detect objects in the images and return bounding boxes around the objects as well as a classification of the type of the object. On the left figure, a bounding box 31 around a pile of books is depicted. The bounding box 31, e.g., the respective corner pixel values, and the classification, e.g., as 'book', can then be used by other modules in the vehicle, e.g., for seat assignment, child seat detection, or for the activity and seating pose detection as described herein. On the right figure of Fig. 3, a bounding box 32 around a child seat is depicted. The respective corner pixel values, e.g., the position of the pixels, may be associated with the object of type 'child seat'.

Object detection algorithms based on machine learning, can learn a plethora of different objects. Hence, objects can be flexibly added into training data. Such objects may be non-living objects such as a mobile phone, tablet, laptop, food, cup, book, and newspaper, or may be living objects or part of living objects such as animal, human, human's hand, human's head, and the like.

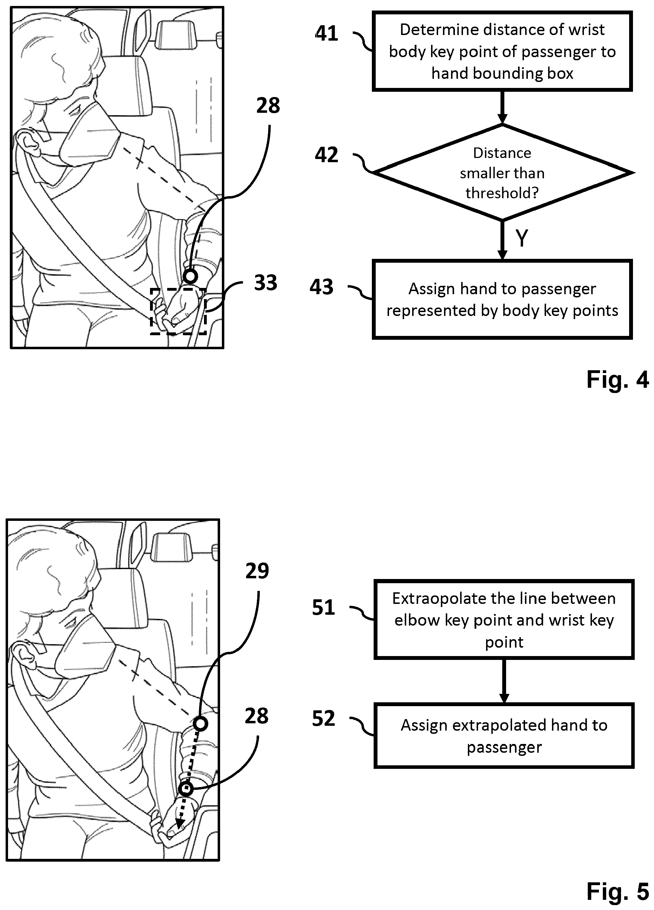

Fig. 4 shows a flowchart and an illustration of an embodiment of assigning hand positions to passengers, which may be part of the hand-region proximity module 14 and/or the hand-object proximity module 15 of Fig. 1. Since both modules require an assignment of hand positions to passengers, the processes of Fig.4 may also be provided by another preprocessing module that is applied before or called within the hand-region proximity module 14 and/or the hand-object proximity module 15.

On the left-hand side of Fig. 4, an excerpt of the image of Fig. 2 is shown with the wrist key point 28 of the co-driver and a bounding box 33 of a object classified as 'hand', e.g., detected by an object detector. At first in box 41, a distance between the wrist body key point 28 and the bounding box 33 is determined. For example, the minimum distance of the body key point 28 and the nearest edge of the bounding box 33 or the distance of the body key point 28 to the center of the bounding box 33 may be determined. If the distance between the wrist body key point 28 and the bounding box 33 being smaller than a threshold (see box 42), the hand is assigned to the passenger as depicted in box 43. If a hand has been assigned to a passenger, in particular, to a specific passenger's wrist body key point as right or left hand, it is ensured that the hand cannot be assigned to wrist body key point, e.g., by deleting the hand from a list of available hands. This ensures that no two or more hands can be assigned to one wrist body key point and that no two or more wrist body key points can be assigned to one hand.

Moreover, in order to handle cases, in which a bounding box of a hand is near to multiple wrist body key points, e.g., of multiple passengers or to the right and left wrist body key points of one passenger, the hand may only be assigned when a further criterion is met. For example, the hand may only be assigned to a passenger and, in particular, as the passenger's right or left hand, if the distance of the hand bounding box and the respective wrist body key point is the smallest distance the hand bounding box to all wrist body key points. Alternatively, other criteria may be applied. For example, the hand may be assigned to that passenger's wrist key point that had over a period of time, e.g., over multiple images taken by an on-board camera, the averaged nearest distance to the hand bounding box.

The result of assigning the hand or, in other words, the position (x/y-pixel position in image) of the hand to the passenger can then be used by the hand-region proximity module 14 and/or the hand-object proximity module 15 to determine for which passenger on which seat which activity event is triggered. The result of assigning the hand may also be provided to further modules in the vehicle.

Fig. 5 shows a flowchart and an illustration of another embodiment of assigning hand positions to passengers, which may be part of the hand-region proximity module 14 and/or the hand-object proximity module 15 of Fig. 1. Since both modules require an assignment of hand positions to passengers, the processes of Fig. 5 may also be provided by another preprocessing module that is applied before or called within the hand-region proximity module 14 and/or the hand-object proximity module 15.

On the left-hand side of Fig. 5, an excerpt of the image of Fig. 2 is shown with the wrist key point 28 and the elbow key point 29 of the co-driver. At first in box 51, the line between the elbow key point 29 and the wrist key point 28 is extrapolated for a specified length. The specified length may be predefined or determined relative to the distance between the wrist key point 28 and the elbow key point 29. The end of the extrapolated line, shown with the dotted arrow on the left-hand side of Fig. 5 is then determined as hand location in the image. Then, in box 52, the hand location is assigned to the passenger.

The result of assigning the hand or, in other words, the position (x/y-pixel position in image) of the hand to the passenger can then be used by the hand-region proximity module 14 and/or the hand-object proximity module 15 to determine for which passenger on which seat which activity event is triggered. The result of assigning the hand may also be provided to further modules in the vehicle.

Assigning hands to passengers may be executed for each detected person in the vehicle. Hence, for each set of body key points of a detected passenger, each wrist key point that has been detected may be compared to those detected hands that have not been assigned to a passenger.

The processes of Figs. 4 and 5 may also be combined. For example, if no objects classified as hands are available for a passenger after executing the processes of Fig. 4, e.g., if all objects classified as hands have already been assigned to a passenger or if no object classified as hand is near the respective wrist key point of the passenger (e.g. the distance to all hands is larger as the threshold of box 42 in Fig. 4), the processes of Fig. 5 are applied.

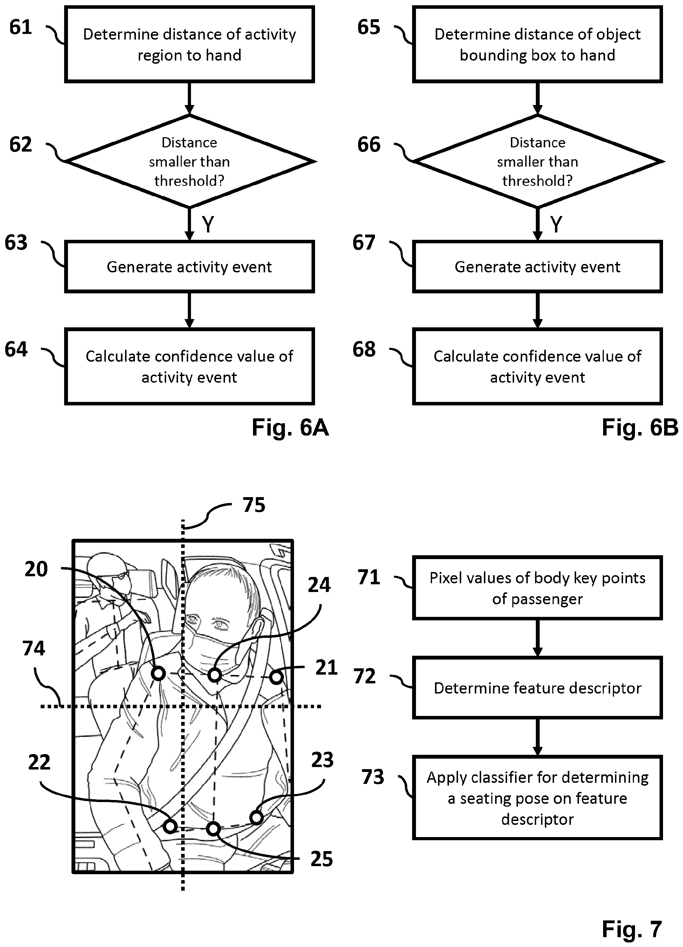

Figs. 6A and 6B present flowcharts of a hand-region proximity check (Fig. 6A) and a hand-object proximity check (Fig. 6B) according to embodiments. The hand-region proximity check may be executed by the hand-region proximity module 14 of Fig. 1 and the hand-object proximity check may be executed by the hand-object proximity module 15 of Fig. 1.

In box 61 of Fig. 6A, a distance between an activity region and the determined and assigned hand position is determined. If the distance is smaller than a threshold (see box 62), an activity event is generated in box 63. The determined activity event may be dependent on the activity region. For example, specific activity regions, such as center console, glove box, door opener, display, may return specific activities, such as searching for objects, opening doors, using smart display, etc., for each particular passenger in the vehicle.

Moreover, a confidence value of the activity event may be determined as shown in box 64. The confidence value can be used to determine which activity is most likely to be performed by a passenger. The confidence value may also be used by further modules to determine whether the triggered event should lead to further actions in the vehicle, such as turning on light or outputting a warning signal.

The processes of Fig. 6A may be applied for each configured activity region in the image. Determining the distance may comprise calculating a normalized distance (normalized with respect to image resolution), comparing the distance to pre-configured threshold, trigger and activity event if distance is smaller threshold, and calculating a confidence based on the normalized distance.

In box 65 of Fig. 6B, a distance between a detected object and the determined and assigned hand position is determined. If the distance is smaller than a threshold (see box 66), an activity event is generated in box 67. The determined activity event may be dependent on the classified object type. For example, specific objects, such as phone, tablet, laptop, food, cups, books, newspapers, may return specific activities, such as phone use, reading, eating, drinking, etc., for each particular passenger in the vehicle.

Moreover, a confidence value of the activity event may be determined as shown in box 68. The confidence value can be used to determine which activity is most likely to be performed by a passenger. The confidence value can be used by further modules to determine whether the triggered event should lead to further actions in the vehicle, such as turning on light or outputting a warning signal.

The processes of Fig. 6B may be applied for each detected objects in the image. Determining the distance may comprise calculating a normalized distance (normalized with respect to image resolution), comparing the distance to pre-configured threshold, trigger and activity event if distance is smaller threshold, and calculating a confidence based on the normalized distance.

Generally, thresholds as described with respect to Figs. 4, 6A, and 6B may be the same or may be different. In particular, the processes of Figs. 6A and 6B may use a same threshold.

Fig. 7 shows a flowchart and an illustration of an embodiment of determining and applying a feature descriptor. On the left-hand side of Fig. 7, an excerpt of the image of Fig. 2 is shown including some of the body key points of the driver. At first in box 71, the body key points, e.g., pixel values of the key points, are received. Based on these body key points, a feature descriptor is determined, e.g., by the body key point feature descriptor module 16 of Fig. 1, which is shown in box 72. Afterwards and as depicted in box 73, a classifier for determining a seating pose is applied on the feature descriptor, e.g., by the seating pose classifier 17 of Fig. 1.

The feature descriptor, which is an input feature vector for the seating pose classifier 17. Using the pixel values directly as feature vector in a classifier is possible but leads to wrong classifications when determining the seating pose, because a small person and a large person would have very different body key point locations in the image (i.e., different pixel values of the body key points), even when sitting in the same seating pose. The feature descriptor is calculated so that it is invariant to the person's size, the vehicle cabin geometry, the camera resolution and field of view, and the like. The feature descriptor, thus, leads to that the seating pose classifier 17 can be applied on more use cases, i.e., it generalizes more easily, and is more robust and flexible.

The feature descriptor may comprise an angle between a line connecting left and right shoulder key points of the passenger and a first image reference line. For example, the line between right shoulder key point 20 and left shoulder key point 21 may be determined. Moreover, either the horizontal reference line 74 or the vertical reference line 75 may be used as first reference line. The first reference line may be pre-defined. Then, the angle between the line connecting the shoulder key points and the first reference line is determined, which reflects the inclination of the person's shoulders.

The feature descriptor may also or alternatively comprise an angle between a line connecting left and right hip key points of the passenger and a second image reference line. For example, the line between right hip key point 22 and left hip key point 23 may be determined. Moreover, either the horizontal reference line 74 or the vertical reference line 75 may be used as second reference line. The second reference line may be pre-defined and may be the same as the first reference line. Then, the angle between the line connecting the hip key points and the second reference line is determined, which reflects the inclination of the person's hips.

The feature descriptor may also or alternatively comprise an angle between a line connecting hip center key point and shoulder center key point of the passenger and a third image reference line. For example, the line between shoulder center key point 24 and hip center key point 25 may be determined. Moreover, either the horizontal reference line 74 or the vertical reference line 75 may be used as third reference line. The third reference line may be pre-defined and may be the different to the first and second reference line. Then, the angle between the line connecting the center key points and the third reference line is determined, which reflects the inclination of the person's spine.

The feature descriptor may also or alternatively comprise normalized key point locations adjusted relative to a seat location bounding box. In particular, normalized means that position and scale of the body key point pixel values are adjusted relative to a pre-configured seat location bunding box in the image. The seat location bounding box may alternatively be determined on the fly according to the current seat position and may also take other information, e.g., mounted child seats etc. into account.

The seating pose classifier 17 may be any type of non-linear machine learning classifier, e.g., a neural network, a random forest, a support vector machine, a boosting cascade algorithm, or the like.

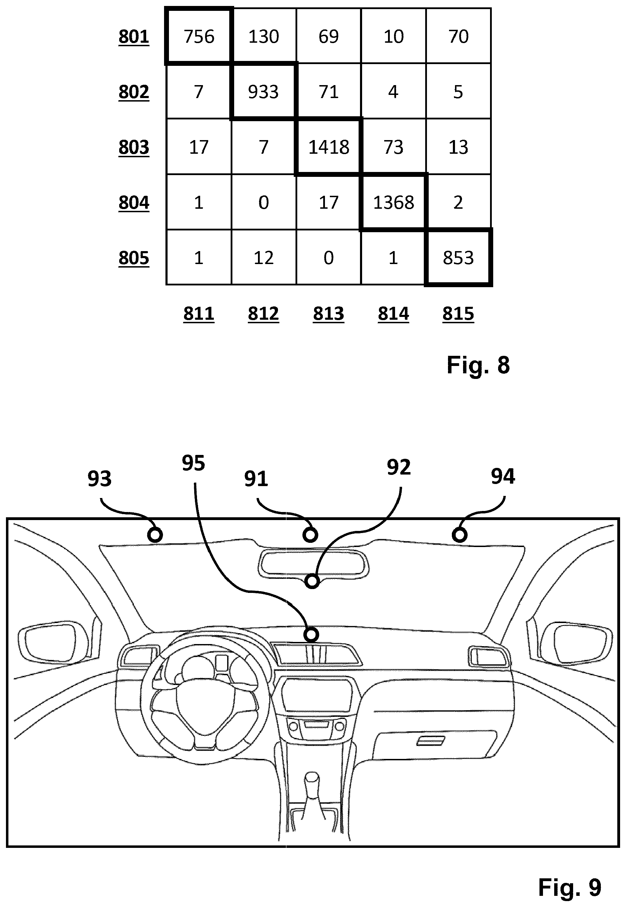

Fig. 8 highlights the results of 5'838 seating pose predictions with a seating pose classifier based on the feature descriptor according to the disclosure. In this example, the seating pose classifier seating pose classifier 17 is a 4-layer fully connected neural network with only a few thousand parameters. Lines 801 to 805 reflect the true label, i.e., what pose the passenger took. Columns 811 to 815 reflect the predicted label, i.e., what the seating pose classifier predicted. Line 801 and column 811 refer to the normal position, line 802 and column 812 refer to leaning forwards, line 803 and column 813 refer to leaning sideways, line 804 and column 814 refer to turning around, and line 805 and column 815 refer to feet on dashboard/seat.

As can be seen from Fig. 8, very less false predictions were achieved. The diagonal boxes have the highest values, i.e., meaning that the seat pose prediction war mostly correct. An average accuracy of over 90% was already reached with the basic 4-layer fully connected neural network with only a few thousand parameters. More complex machine learning predictors will lead to an even higher accuracy due to the herein presented feature descriptor.

Fig. 9 presents an interior of a vehicle with possible positions of cameras. The vehicle may only comprise one camera but only a plurality of cameras at different positions. The cameras, which may be color or black/which cameras, infrared cameras, depth cameras, heat cameras, or a combination thereof, can be placed, e.g., in the middle over the front windshield and even over the rearview mirror as illustrated with position 91.

Additionally or alternatively, the or another camera can be located below the rearview mirror as illustrated with position 92. If one camera is located at position 93, another one will usually also be located at position 94. With two cameras a depth image or 3D image can be created. Additionally or alternatively, the or another camera can be located the dashboard or in the middle console as depicted with position 95. These cameras may then capture images, e.g., at regular time intervals or if trigged by an application that requires an activity or pose classification as described herein. The applications using the images may be executed on the onboard computing system or at least in part executed remotely, e.g., in the cloud.

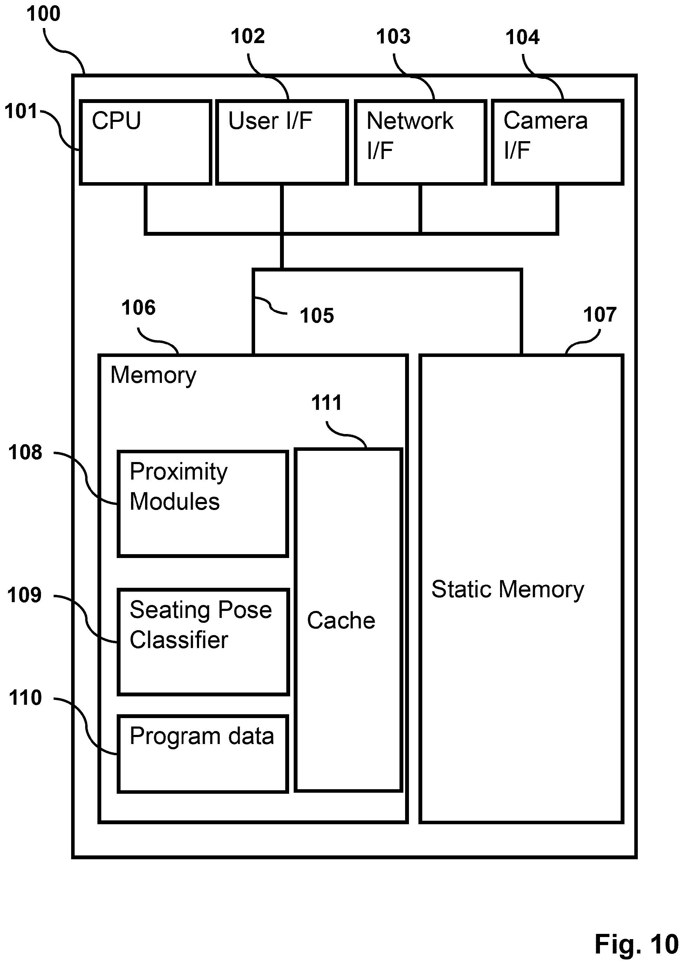

Fig. 10 is a diagrammatic representation of internal components of a computing system 100 implementing the functionality as described herein. The computing system 100 may be located in the vehicle and includes at least one processor 101, a user interface 102, a network interface 103 and a main memory 106, that communicate with each other via a bus 105. Optionally, the computing system 100 may further include a static memory 107 and a disk-drive unit (not shown) that also communicate with each via the bus 105. A video display, an alpha-numeric input device and a cursor control device may be provided as examples of user interface 102.

Furthermore, the computing system 100 may also comprise a specified camera interface 104 to communicate with an onboard camera of the vehicle. Alternatively, the computing system 100 may communicate with the camera via the network interface 103. The camera is used for taking the image. The computing system 100 may also be connected to database systems (not shown) via the network interface, wherein the database systems store at least part of the images needed for providing the functionalities described herein.

The main memory 106 may be a random-access memory (RAM) and/or any further volatile memory. The main memory 106 may store program code for the proximity modules 108 and for the seating pose classifier 109. Other modules needed for further functionalities described herein may be stored in the memory 106, too. The memory 106 may also store additional program data 110 required for providing the functionalities described herein. Part of the program data 110, the proximity modules 108 and/or for the seating pose classifier 109 may also be stored in a separate, e.g., cloud memory and executed at least in part remotely.

According to an aspect, a vehicle is provided. The herein described methods may be stored as program codes 108, 109, or 110 and may be at least in part comprised by the vehicle. Parts of the program codes 108, 109, or 110 may also be stored and executed on a cloud server to reduce the computational effort on the vehicle's computing system 100. The vehicle may also comprise one or more cameras, e.g., connected via the camera interface 104, for capturing one or more images.

According to an aspect, a computer program comprising instructions is provided. These instructions, when the program is executed by a computer, cause the computer to carry out the methods described herein. The program code embodied in any of the systems described herein is capable of being individually or collectively distributed as a program product in a variety of different forms. In particular, the program code may be distributed using a computer readable storage medium having computer readable program instructions thereon for causing a processor to carry out aspects of the embodiments described herein.

Computer readable storage media, which are inherently non-transitory, may include volatile and non-volatile, and removable and non-removable tangible media implemented in any method or technology for storage of information, such as computer-readable instructions, data structures, program modules, or other data. Computer readable storage media may further include random access memory (RAM), read-only memory (ROM), erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer.

A computer readable storage medium should not be construed as transitory signals per se (e.g., radio waves or other propagating electromagnetic waves, electromagnetic waves propagating through a transmission media such as a waveguide, or electrical signals transmitted through a wire). Computer readable program instructions may be downloaded to a computer, another type of programmable data processing apparatus, or another device from a computer readable storage medium or to an external computer or external storage device via a network.

It should be appreciated that while particular embodiments and variations have been described herein, further modifications and alternatives will be apparent to persons skilled in the relevant arts. In particular, the examples are offered by way of illustrating the principles, and to provide a number of specific methods and arrangements for putting those principles into effect.

In certain embodiments, the functions and/or acts specified in the flowcharts, sequence diagrams, and/or block diagrams may be re-ordered, processed serially, and/or processed concurrently without departing from the scope of the disclosure. Moreover, any of the flowcharts, sequence diagrams, and/or block diagrams may include more or fewer blocks than those illustrated consistent with embodiments of the disclosure.

The terminology used herein is for the purpose of describing particular embodiments only and is not intended to be limiting of the embodiments of the disclosure. It will be further understood that the terms "comprise" and/or "comprising," when used in this specification, specify the presence of stated features, integers, steps, operations, elements, and/or components, but do not preclude the presence or addition of one or more other features, integers, steps, operations, elements, components, and/or groups thereof. Furthermore, to the extent that the terms "include", "having", "has", "with", "comprised of", or variants thereof are used in either the detailed description or the claims, such terms are intended to be inclusive in a manner similar to the term "comprising".

While a description of various embodiments has illustrated the method and while these embodiments have been described in considerable detail, it is not the intention of the applicants to restrict or in any way limit the scope of the appended claims to such detail. Additional advantages and modifications will readily appear to those skilled in the art. The disclosure in its broader aspects is therefore not limited to the specific details, representative apparatus and method, and illustrative examples shown and described. Accordingly, the described embodiments should be understood as being provided by way of example, for the purpose of teaching the general features and principles, but should not be understood as limiting the scope, which is as defined in the appended claims.

## Claims

1. A computerized method of activity and seating pose detection in a vehicle comprising:
- determining activity events per seat in the vehicle based on at least one of a hand-region proximity check and a hand-object proximity check;
- determining seating pose events per seat in the vehicle based on a seating pose classifier; and
- trigger one or more safety or comfort functions in the vehicle based on the activity events and/or the seating pose events.

2. The method of claim 1, wherein the hand-region proximity check and/or the hand-object proximity check comprise assigning hands to one or more passengers in the vehicle.

3. The method of claim 2, wherein assigning hands to the one or more passengers in the vehicle comprises:
- obtaining an object detected in the vehicle and classified as hand;
- determining a distance between a wrist body key point of a passenger and a bounding box of the object classified as hand; and
- in response to the distance between the wrist body key point and the bounding box being smaller than a first threshold, assigning the hand position to the passenger.

4. The method of claim 2 or claim 3, wherein assigning hands to the one or more passengers in the vehicle comprises:
- extrapolating a line between an elbow key point and a corresponding wrist key point of a passenger for a hand distance; and
- assigning the hand position to the passenger.

5. The method of claim 4 being triggered in response to no objects classified as hands being available for a passenger.

6. The method of any one of the preceding claims, wherein the hand-region proximity check comprises:
- determining a distance between an activity region and a position of a hand of a passenger; and
- in response to the distance between the activity region and a position of the hand being smaller than a second threshold, generating an activity event and calculating a corresponding activity confidence value.

7. The method of any one of the preceding claims, wherein the hand-object proximity check comprises:
- determining a distance between one or more bounding boxes of one or more detected objects in the vehicle and a position of a hand of a passenger; and
- in response to the distance between the one or more bounding boxes and the position of the hand being smaller than a third threshold, generating an activity event and calculating a corresponding activity confidence value.

8. The method of any one of the preceding claims, wherein determining seating pose events per seat comprises:
- determining a feature descriptor of a passenger based on body key points of the passenger in the vehicle; and
- applying the seating pose classifier on the feature descriptor.

9. The method of claim 8, wherein the feature descriptor comprises at least one of:
- an angle between a line connecting left and right shoulder key points of the passenger and a first image reference line;
- an angle between a line connecting left and right hip key points of the passenger and a second image reference line;
- an angle between a line connecting hip center key point and shoulder center key point of the passenger and a third image reference line; and
- normalized key point locations adjusted relative to a seat location bounding box.

10. The method of any one of the preceding claims, wherein the seating pose classifier is a fully connected neural network, a random forest, a support vector machine, or a boosting cascade classifier.

11. The method of any one of the preceding claims, wherein one or more detected objects in the vehicle are classified into object types, wherein the object types comprise as at least one of mobile phone, tablet, laptop, food, cup, book, and newspaper, wherein the determined activity event is dependent on the classified object type.

12. The method of any one of the preceding claims, wherein one or more activity regions in the vehicle correspond to locations in the vehicle, wherein the locations comprise as at least one of center console, glove box, door opener, and smart display, wherein the determined activity event is dependent on the defined location.

13. A system of activity and seating pose detection in a vehicle, the system implementing the method of any one of the preceding claims.

14. A vehicle comprising:
- a camera for capturing images;
- the system of activity and seating pose detection of claim 13.

15. A computer program product comprising instructions, which, when executed on a computer, cause the computer to perform the method any one of claims 1 to 12.
